Europäisches Patentamt

European Patent Office

Office européen des brevets

(11) Publication number: **0 291 015 B1**

## EUROPEAN PATENT SPECIFICATION

(45) Date of publication of patent specification: **15.04.92**  (51) Int. Cl.5: **C01B 3/24**

(21) Application number: **88107502.2**

(22) Date of filing: **10.05.88**

(54) **Process for producing mixture containing hydrogen gas.**

(30) Priority: **13.05.87 JP 114408/87**

(43) Date of publication of application:
**17.11.88 Bulletin  88/46**

(45) Publication of the grant of the patent:
**15.04.92 Bulletin  92/16**

(84) Designated Contracting States:
**DE FR GB**

(56) References cited:
**AU-A- 513 116**
**US-A- 2 676 156**
**US-A- 4 714 593**

**PATENT ABSTRACTS OF JAPAN vol. 11, no. 8 (C-396)(2455), 9 January 1987; & JP-A-61 186201 (MITSUBISHI HEAVY IND. LTD.) 19.08.1986**

(73) Proprietor: **TOKYO INSTITUTE OF TECHNOL-OGY**
**12-1, O-okayama 2-chome, Meguro-ku Tokyo 152(JP)**

Proprietor: **ISHIKAWAJIMA-HARIMA JUKOGYO KABUSHIKI KAISHA**
**2-1, Ohtemachi 2-chome**

**Chiyoda-ku Tokyo 100(JP)**

Proprietor: **KABUSHIKI KAISHA KOBE SEIKO SHO**
**3-18 Wakinohama-cho 1-chome Chuo-ku Kobe 651(JP)**

Proprietor: **CHIYODA CORPORATION**
**12-1, Tsurumichuo 2-chome Tsurumi-ku Yokohama 230(JP)**

Proprietor: **KABUSHIKI KAISHA TOSHIBA**
**72, Horikawa-cho Saiwai-ku Kawasaki-shi Kanagawa-ken 210(JP)**

Proprietor: **MITSUBISHI-KASEI TECHNOEN-GINEERS LTD.**
**No. 2-12, Sendagaya 4-chome Shibuya-ku Tokyo(JP)**

Proprietor: **MITSUBISHI JUKOGYO KABUSHIKI KAISHA**
**5-1, Marunouchi 2-chome Chiyoda-ku Tokyo 100(JP)**

EP 0 291 015 B1

Proprietor: **MITSUBISHI PETROCHEMICAL EN-GINEERING CO., LTD.**
**5-4, Nihonbashi Bakuro-cho 1-chome**
**Chuo-ku Tokyo(JP)**

(72) Inventor: **Echigo, Ryozo**
**3-17-603, Ecchujima 1-chome**
**Kohtoh-ku Tokyo(JP)**
Inventor: **Yoshizawa, Yoshio**
**10-36, O-okayama 2-chome**
**Meguro-ku Tokyo(JP)**
Inventor: **Ikeda, Mikio**
**5-35-2, Rokkodai**
**Matsudo-shi Chiba-ken(JP)**
Inventor: **Aoki, Mamoru**
**26-18, Yokoo 2-chome Suma-ku**
**Kobe-shi Hyogo-ken(JP)**
Inventor: **Shimizu, Ryosuke**
**1-18-1, Shitanoya-cho Tsurumi-ku**
**Yokohama-shi Kanagawa-ken(JP)**
Inventor: **Onomura, Masaki**
**21-6, Honamanuma 2-chome**
**Suginami-ku Tokyo(JP)**
Inventor: **Iwasa, Koichi**
**137-28, Hachigasaki**
**Matsudo-shi Chiba-ken(JP)**
Inventor: **Ide, Yuichi**
**191, Fukabori-machi 3-chome**
**Nagasaki-shi Nagasaki-ken(JP)**
Inventor: **Yamana, Noboru**
**4098-21, Yatabe Hasaki-machi**
**Kashima-gun Ibaraki-ken(JP)**

(74) Representative: **Hansen, Bernd, Dr.rer.nat. et al**
**Hoffmann, Eitle & Partner Patentanwälte Arabellastrasse 4 Postfach 81 04 20**
**W-8000 München 81(DE)**

2

## Description

This invention relates to a process for producing a gaseous mixture containing hydrogen gas. More specifically, it relates to a process for producing a gaseous mixture containing hydrogen gas by reacting methane with steam using a radiation heating device.

There has been an increasing demand for hydrogen in recent years because hydrogen changes to water when burnt and thus its cleanness is attractive. For example, attempts are made to use hydrogen in direct reductive steel making in the steel making industry in order to control pollution. The technique of using hydrogen as a fuel in fuel cells is most noteworthy. Fuel cells have many advantages such as high energy efficiency and excellent time response characteristics. Furthermore, since they can be set up on a scale corresponding to the scale of a local demand, power transmission losses are small. Accordingly, fuel cells are expected to make great contributions to new urbane systems in the next century.

It is known that hydrogen gas can be produced from various sources. For example, hydrogen can be produced from methane and steam in accordance with the following reaction: $CH_4 + H_2O \rightarrow CO + 3H_2$.

This reaction is an endothermic reaction, and produces an endotherm of as high as 206 KJ per mole of methane ($CH_4$). Hence, the conventional practice is to heat a pipe having length of 10 m or more in a furnace, pass a starting gaseous mixture of methane and steam through the pipe, and thereby heat the starting gaseous mixture. Since, however, the input of heat for heating the starting gaseous mixture is effected by heat transfer through the pipe, the heat transfer rate and the heating efficiency are low. To compensate for this deficiency, a total amount of heat transfer above a certain level is secured by increasing the length of the pipe. Furthermore, according to this method, heat transfer occurs in the radial direction, the wall portion of the pipe is at a much higher temperature than its central portion, and methane tends to undergo carbonization near the wall of the pipe. Thus, a considerably large excess of steam is required in this method to prevent carbonization, and the above conventional method is not at all efficient because of large energy losses.

It is an object of this invention to provide a method of efficiently and industrially advantageously producing a gaseous mixture containing hydrogen gas.

Another object of this invention is to provide a method of producing a gaseous mixture containing hydrogen gas efficiently with reduced energy losses.

Still another object of this invention is to provide a method of producing a gaseous mixture containing hydogen gas with good productivity by a radiation heating device having a very high thermal efficiency, particularly a very high heat transfer efficiency.

A yet another object of this invention is to provide a method of efficiently producing a gaseous mixture containing hydrogen gas while preventing carbonization of methane without maintaining the ratio of steam to methane high.

Further objects of this invention along with its advantages will become apparent from the following description.

In accordance with this invention, these objects and advantages are achieved by a method of producing a gaseous mixture containing hydrogen gas by reacting a methane-rich gas composed mainly of lower hydrocarbons with steam under heat in a radiation heating device comprised of a heating zone (A), a zone (B) to be heated, a gas non-permeable boundary member (C) separating and defining these zones (A) and (B), a porous radiating member (D) having many gas-flowable pores in the heating zone (A) and a porous heat receiving member (E) having many gas-flowable pores in the heated zone (B), which comprises

passing a high-temperature gas through the pores of the porous radiating member (D) from that side of the heating zone (A) which adjoins the gas non-permeable boundary member (C) to thereby heat the porous radiating member (D),

using a porous heat receiving member having a catalyst for said reaction under heat on the surfaces of gas-flowable pores as the porous heat receiving member (E) in the zone (B) to be heated, and

passing steam and a methane-rich gas composed mainly of lower hydrocarbons through the pores of the porous heat receiving member from that side of the heated zone (B) which adjoins the gas non-permeable boundary member (C) to form a gaseous mixture containing hydrogen gas.

Figure 1 is a schematic sectional view of a radiation heating device that can be used for practicing the method of this invention;

Figure 2 is a graph showing one example of the relation between the conversion (%) of methane and the flow rate of methane (N $m^3$/h) in the method of this invention; and

Figure 3 is one example of a temperature distribution within the radiation heating device used in the method of this invention.

The radiation heating device used in this invention has a heating zone (A) and a zone (B) to be heated with a gas non-permeable boundary member (C) interposed therebetween. A porous radiating member (D) is provided in the heating zone (A), and a porous heat receiving member (E), in the zone (B). A catalyst is carried on the porous heat receiving member (E) as will be described hereinafter.

The porous radiating member may be composed of, for example, porous metal, porous metal oxides, porous ceramics, porous mineral-forming materials, or a stacked assembly of wire meshes having a mesh opening size of, for example, 0.1 to 10 mm. It may be in the form of, for example, a plate, a block, a block having at least one hollow passage extending therethrough, a pellet, or a ring-like body.

The materials and shape of the porous heat receiving member may be the same as the porous radiating member.

The porous radiating member and the porous heat receiving member have pores through which a gas can flow. These porous members have a porosity of, for example, 60 to 99 % by volume. Within this porosity range, the porous members advantageously have pores a greater portion of which consists of pores having a pore diameter distributed within the range of, for example, 0.01 to 10 mm.

In the device used in this invention, the gas non-permeable boundary member (C) may be formed of a material substantially optically transparent to a radiation energy, for example, quartz glass, or a material substantially optically non-transparent to a radiation energy, such as a heat-resistant metallic material, a heat-resistant metal oxide material, or a heat-resistant ceramic material.

The heat-resistant metallic material may be, for example, a high alloy such as stainless steel, chromium steel and molybdenum steel. The heat-resistant metallic oxide may be, for example, aluminum oxide and titanium oxide. Examples of the heat-resistant ceramic material are cordierite and mullite.

The gas non-permeable boundary member (C) may be in the form of, for example, a thin film, a plate, a ring, or a tube.

The entire structure of the radiation heating device used in this invention may be such that the heating zone and the heated zone are positioned next to each other or vertically with the gas non-permeable boundary member therebetween; or the heating zone surrounds the zone to be heated, with the boundary member therebetween, or the heated zone surrounds the heating zone with the boundary member therebetween.

Thus, example of the radiation heating device used in this invention may be

a device in which the porous radiating member exists on one side of the gas non-permeable boundary member and the heated zone is formed on the other side of the boundary member, and a high-temperature gas is formed in or introduced into a zone on the opposite side;

a device in which the porous radiating member exists outwardly of the gas non-permeable boundary member and the heated zone is formed inwardly of the boundary member, and a high-temperature gas is formed in or introduced into the heating zone outwardly of the gas non-permeable boundary member; or

a device in which the porous radiating member exists inwardly of the gas non-permeable boundary member and the heated zone is formed outwardly of the boundary member, and a high-temperature gas is formed in or introduced into the heating zone inwardly of the gas non-permeable boundary member.

In the device used in this invention, the porous heat receiving member in the heated zone is heated by the radiation energy at least from the porous radiating member in the heating zone either directly (where the gas non-permeable boundary member is optically transparent to the radiation energy) or indirectly (where the gas non-permeable boundary member is optically non-transparent to the radiation energy).

A high-temperature gas is passed through the pores of the porous radiating member (D) from that side of the heating zone (A) which adjoins the gas non-permeable boundary member (C) in order to heat the porous radiating member in the heating zone. The sensible heat of the high-temperature gas consequently moves to the porous radiating member and heat the porous radiating member to a high temperature.

The high-temperature gas may be a combustion gas or other high-temperature gases. When the combustion gas is used as the high-temperature gas, a combustion zone for forming a combustion gas by burning a fuel may be provided within the heating zone of the radiation heating device. When the high temperature gas is another high-temperature gas such as steam, it is formed outside the heating zone. Hence, the radiation heating device used in this invention does not necessarily have a combustion zone within the heating zone. Furthermore, since the high-temperature combustion gas may also be formed outside the heating zone, the combustion gas may be used as the high-temperature gas in the radiation heating device having no combustion zone.

The positional relationship of the porous radiating member in the heating zone and the gas non-permeable boundary member is arbitary so long as the high-temperature gas is passed through the pores of the porous radiating member and discharged from that surface of the heating zone which adjoins the gas non-permeable boundary member. The porous radiating member and the gas non-permeable boundary member may be positioned with a space therebetween or in substantial contact with each other. In the former case, the distance between the gas non-permeable boundary member and the porous radiating member is, for example, not more than 1,000 mm, preferably not more than 500 mm. In this case, it is advantageous to introduce or form the high-temperature gas into or in the above space. It is also possible to introduce or form the high-temperature gas into or in the pores of the porous radiating member. When the burning flame is to be formed in the above space, it is necessary to form a space at least sufficient to form the burning flame between the gas non-permeable boundary member and the porous radiating member. Furthermore, it is advantageous to form the burning flame near that surface of the porous radiating member in this space which faces the boundary member.

When the porous radiating member is in substantial contact with the gas-non-permeable boundary member, the high-temperature gas is introduced into, or formed in, the pores of the porous radiating member. When the burning flame is to be formed within the pores of the porous radiating member, it is possible to form the burning flame within the pores of that side of the porous radiating member which faces the gas non-permeable boundary member, form a zone which at least does not form a burning flame in the pores of the other side of the porous radiating member, and discharge the burnt gas through this zone. It is also possible to provide a space having no porous radiating member between the zone of the porous radiating member in which to form the burning flame and the zone of the porous radiating member in which no burning flame is formed, and to discharge the burnt gas from the zone in which to form the burning flame through the aforesaid space and the zone in which no burning flame is formed.

When the burning flame is to be formed within the pores of the porous radiating member, it is advantageous that the porosity of the porous radiating member in the zone in which to form the burning flame is larger than that in the zone in which no buring flame is formed.

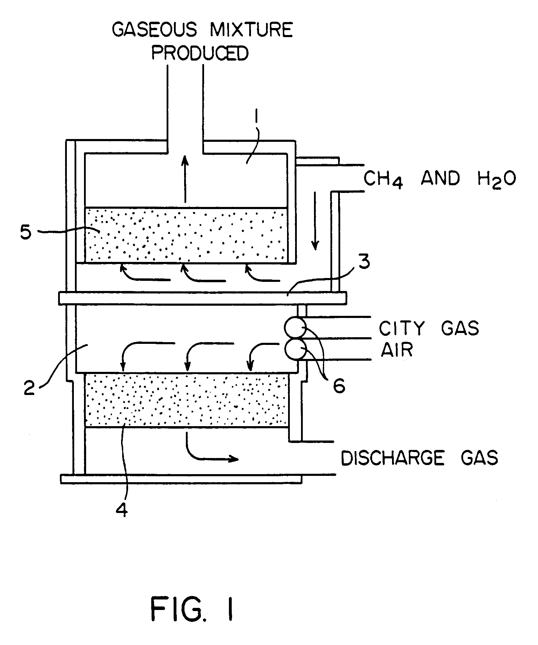

Specific embodiments of the radiating heating device used in the method of this invention are those shown in Figures 1 to 6 of Japanese Laid-Open Patent Publication No. 110875/1986 (corresponding to U. S. Patent Application Serial No. 22507 and British Laid-Open Patent Application No. 2167176). These embodiments are preferably used in the method of this invention. In the method of this invention, a porous heat receiving member having a catalyst on the surface of its gas-flowable pores is used as the porous heat receiving member (E) in the zone (B) of the radiation heating device.

The catalyst may be one which is effective for the formation of hydrogen and carbon monoxide from methane and steam. Known catalysts, for example, nickel, alkali metals such as potassium, and alkaline earth metals such as magnesium, may be used. These catalysts may be carried on the surfaces of the pores of the porous heat receiving member by known methods.

The porous heat receiving member having a catalyst is heated by

(a) directly heating the boundary member with a high-temperature gas, and

(b) heating the boundary member with the radiation heat of the porous radiating member.

The method of this invention is carried out by passing a gas composed mainly of methane and steam through the pores of the porous heat receiving member having a catalyst heated to a high temperature by the above heating from that side of the heat receiving member which adjoins the gas non-permeable boundary member (C). The method of this invention has the advantage of greatly increasing the conversion of methane over the case of passing the starting gas into the pores of the porous heat receiving member from a site remote from the gas non-permeable boundary member toward a site approaching the boundary member.

The positional relation between the porous heat receiving member in the heated zone and the gas non-permeable boundary member is arbitary so long as the starting gas can be passed through the porous heat receiving member in the manner described. For example, as described above with regard to the porous radiating member, the porous heat receiving member may be positioned away from the gas non-permeable boundary member, or in substantial contact with it.

The starting gases are a methane riched gas composed mainly of lower hydrocarbons and steam. The methane riched gas composed mainly of lower hydrocarbons contains at least 10 % by volume (at STP), especially 20 % by volume, of methane.

The mole ratio of lower hydrocarbons to steam in the starting gases is usually 1:2-6, preferably 1:3-4.

The starting gases are used at a space velocity of usually 1 to 10 $Nm^3$/hr, preferably 5 to 10 $Nm^3$/hr, per liter of the porous heat receiving member.

The maximum temperature of that site of the porous heat receiving member which faces the non-permeable boundary member is preferably 600 to 900 ° C, more preferably 750 to 850 ° C.

The following examples illustrate the present invention in greater detail.

EXAMPLE

(1) Figure 1 of the accompanying drawings shows a schematic sectional view of the radiation heating device used in the following experiment.

In Figure 1, the numeral 2 represents a heating zone; 1, a zone to be heated; 3, a gas non-permeable boundary member; 4, a porous radiating member; and 5, a porous heat-receiving member having a catalyst carried on it.

In the device of Figure 1, the part above the boundary member 3 is the zone to be heated, and the part below it is the heating zone.

The porous radiating member was constructed of 15 heat-resistant wire meshes #16 stacked one on top of the other. The porous heat receiving member is a stacked assembly of three ceramic foams of cordierite (POROUS, #20) (each having a thickness of 10 mm) having a nickel catalyst carried on it.

A cylindrical stainless steel "Bell-Jar" having a thickness of 3 mm, a diameter at its bottom surface of 200 mm, and a height of 120 mm was used as the gas non-permeable boundary member.

(2) City gas was burnt with air by a gas burner 6 in the heating zone. The air excessive ratio was 1.2. The high-temperature burnt gas formed passed downwardly through the pores of the porous radiating member 4. The sensible heat of the burnt gas was moved to the porous radiating member and the temperature of the gas itself decreased rapidly, and the gas was exhausted from below. Radiation occurs mainly upstream, namely toward the gas non-permeable boundary member. The heat energy was sent to the zone to be heated by the absorption and injection of the radiation by the gas non-permeable boundary member.

The starting gas composed of steam and methane, as shown in Figure 1, descends between the Bell-Jar and the cylinder and changes in direction at the gas non-permeable bundary member, and passed upwardly through the pores of the porous heat receiving member having a catalyst carried on it. At this time, the starting gas was exposed to a high temperature in the presence of the catalyst and undergoes the desired reaction to form hydrogen and carbon monoxide. The gaseous mixture containing hydrogen gas so formed was discharged from the top of the device.

(3) In the experiment, a starting gas composed of an ethane and steam in a mole ratio of 0.25 was pre-heated to about 300 °C, and passed through the zone to be heated. The temperature distributions of the porous radiating member and the porous heat receiving member in the thickness direction were measured by platium-platinum rhodium sheath thermocouple and an alumel chromel sheath thermocouple provided nearly centrally in the device.

The resulting gaseous mixture containing hydrogen gas was analyzed by TCD-type gas chromatography. Silica gel (for removal of steam) and activated charcoal were used as an adsorbent, and argon was used as a carrier gas. This made it possible to measure $H_2$, CO, $CH_4$ and $CO_2$ in the produced gaseous mixture together.

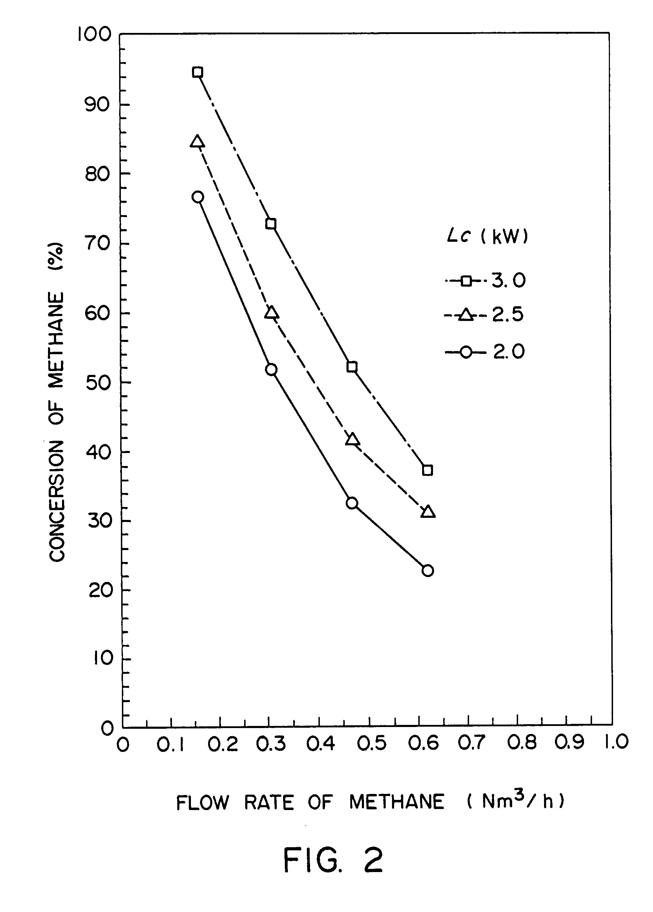

(4) Figure 2 shows the conversion (%) of methane versus a methane flow rate of 0.16, 0.31, 0.47 and 0.62 $Nm^3$/hr when burning load Lc in the heating zone was 2.0, 2.5 and 3.0 KW, respectively.

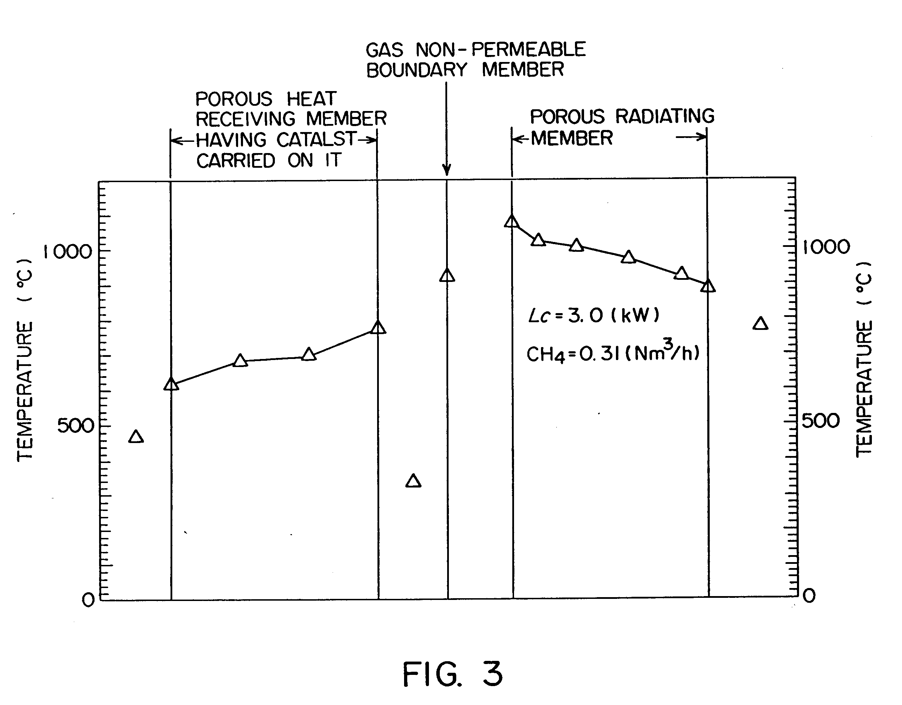

Figure 3 shows a temperature distribution when Lc was 3.0 KW and the flow rate of methane was 0.31 $Nm^3$.

**Claims**

1. A method of producing a gaseous mixture containing hydrogen gas by reacting a methane-rich gas composed mainly of lower hydrocarbons with steam under heat in a radiation heating device comprised of a heating zone (A), a zone (B) to be heated, a gas non-permeable boundary member (C) separating and defining these zones (A) and (B), a porous radiating member (D) having many gas-flowable pores in the heating zone (A) and a porous heat receiving member (E) having many gas-flowable pores in the heated zone (B), which comprises

passing a high-temperature gas through the pores of the porous radiating member (D) from that side of the heating zone (A) which adjoins the gas non-permeable boundary member (C) to thereby heat the porous radiating member (D),

using a porous heat receiving member having a catalyst for said reaction under heat on the surfaces of gas-flowable pores of the porous heat receiving member (E) in the zone (B) to be heated, and

passing steam and a methane-rich gas composed mainly of lower hydrocarbons through the pores of the porous heat receiving member from that side of the heated zone (B) which adjoins the gas non-permeable boundary member (C) to form a gaseous mixture containing hydrogen gas.

2. The method of claim 1 wherein the methane-rich gas composed mainly of lower hydrocarbons and steam are used in a gas/steam mole ratio of 1:2-6.

3. The method of claim 1 wherein the methane-rich gas composed mainly of lower hydrocarbons and steam are passed at a space velocity of 1 to 10 Nm³/hr per liter of the porous heat receiving member.

4. The method of claim 1 wherein the maximum temperature of that site of the porous heat receiving member which faces the non-permeable boundary member (C) is 600 to 900 °C.

## Revendications

1. Procédé pour produire un mélange gazeux contenant de l'hydrogène gazeux en faisant réagir un gaz riche en méthane composé principalement de carbures d'hydrogène inférieurs avec de la vapeur par chauffage dans un dispositif de chauffage par radiation constitué d'une zone de chauffage (A), d'une zone (B) qui doit être chauffée, d'un élément de séparation imperméable au gaz (C) séparant et définissant ces zones (A) et (B), d'un élément poreux de rayonnement (D) comportant de nombreux pores par lesquels le gaz peut s'écouler dans la zone de chauffage (A) et un élément poreux de réception de la chaleur (E) comportant de nombreux pores par lesquels le gaz peut s'écouler dans la zone chauffée (B), qui comprend les opérations consistant à:

faire passer un gaz à haute température à travers les pores de l'élément poreux de rayonnement (D) depuis le côté de la zone de chauffage (A) qui est attenant à l'élément de séparation imperméable au gaz (C) pour chauffer de ce fait l'élément poreux de rayonnement (D),

utiliser un élément poreux de réception de la chaleur comportant un catalyseur pour la réaction à la chaleur sur les surfaces des pores par lesquels le gaz peut s'écouler de l'élément poreux de réception de la chaleur (E) dans la zone (B) qui doit être chauffée et

faire passer de la vapeur et un gaz riche en méthane composé principalement de carbures d'hydrogène inférieurs à travers les pores de l'élément poreux de réception de la chaleur à partir du côté de la zone chauffée (B) qui est attenant à l'élément de séparation imperméable au gaz (C) pour former un mélange de gaz contenant de l'hydrogène gazeux.

2. Procédé selon la revendication 1, dans lequel le gaz riche en méthane composé principalement de carbures d'hydrogène inférieurs et de vapeur sont utilisés dans un rapport molaire gaz/vapeur de 1:2 à 6.

3. Procédé selon la revendication 1, dans lequel le gaz riche en méthane composé principalement de carbures d'hydrogène inférieurs et de vapeur sont passés à une vitesse spatiale de 1 à 10 nm³/hr par litre vers l'élément poreux de réception de la chaleur.

4. Procédé selon la revendication 1, dans lequel la température maximale de cet emplacement de l'élément poreux de réception de la chaleur qui fait face à l'élément de séparation imperméable au gaz (C) est de 600 à 900 °C.

## Patentansprüche

1. Verfahren zum Herstellen einer gasförmigen Mischung, die Wasserstoffgas enthält, durch Umsetzen eines methanreichen Gases, das hauptsächlich aus niederen Kohlenwasserstoffen zusammengesetzt ist, mit Wasserdampf unter Wärme in einer Wärmeausstrahlungsvorrichtung, umfassend eine Heizzone (A), eine zu erwärmende Zone (B), ein gasundurchlässiges Grenzteil (C), das diese Zonnen (A) und (B) trennt und definiert, ein poröses Ausstrahlungsteil (D), das viele Poren, durch die Gas fliessen kann, in der Heizzone (A) hat, und ein poröses Wärmeempfangteil (E), das viele Poren, durch die Gas fliessen kann, in der Heizzone (B) hat, wobei dieses Verfahren umfasst:
Durchleiten eines Gases hoher Temperatur durch die Poren eines porösen Ausstrahlungsteils (D) von der Seite der Heizzone (A), die sich an das gasundurchlässige Grenzteil (C) anschliesst, wodurch das poröse Ausstrahlungsteil (D) erwärmt wird,
Verwenden eines porösen Wärmeempfangsteils mit einem Katalysator für diese Reaktion unter Wärme auf den Oberflächen der Poren, durch die Gas fliessen kann, des porösen Wärmeempfangsteils (E) in der zu erwarmenden Zone (B),
und Durchleiten von Wasserdampf und einem methanreichen Gas, hauptsächlich zusammengesetzt aus niederen Kohlenwasserstoffen, durch die Poren des porösen Wärmeempfangsteils von der Seite der erwärmten Zone (B), die sich an das gasundurchlässige Grenzteil (C) anschliesst, wobei eine gasförmige Wasserstoffgas enthaltende Mischung gebildet wird.

2. Verfahren nach Anspruch 1, bei dem das methanreiche Gas, das hauptsächlich aus niederen Kohlenwasserstoffen und Wasserdampf zusammengesetzt ist, in einem Gas/Wasserdampf-Molverhältnis von 1:2-6 verwendet wird.

3. Verfahren nach Anspruch 1, bei dem das methanreiche Gas, das hauptsächlich aus niederen Kohlenwasserstoffen und Wasserdampf zusammengesetzt ist, mit einer Raumgeschwindigkeit von 1 bis 10 Nm$^3$/Std. pro Liter des porösen Wärmeempfangsteils durchgeleitet wird.

4. Verfahren nach Anspruch 1, bei dem die maximale Temperatur der Seite des porösen Wärmeempfangsteils, die dem undurchlässigen Grenzteil (C) zugewendet ist, 600 bis 900°C beträgt.

FIG. 1

FIG. 2

FIG. 3